Europäisches Patentamt

European Patent Office

Office européen des brevets

(11) Numéro de publication: **0 348 303**
**A1**

## (12) DEMANDE DE BREVET EUROPEEN

(21) Numéro de dépôt: **89401784.7**

(22) Date de dépôt: **23.06.89**

(51) Int. Cl.⁴: **C 09 K 5/00**

(30) Priorité: **24.06.88 FR 8808512**

(43) Date de publication de la demande:
**27.12.89 Bulletin 89/52**

(84) Etats contractants désignés: **DE ES FR GB**

(71) Demandeur: **Plassin, Bernard**
**9, rue Blondat**
**F-92100 Boulogne (FR)**

(72) Inventeur: **Plassin, Bernard**
**9, rue Blondat**
**F-92100 Boulogne (FR)**

(74) Mandataire: **Hammond, William et al**
**Cabinet CORRE & HAMMOND 17 rue Pasteur**
**F-92300 Levallois (FR)**

(54) **Additif notamment pour produit antigel.**

(57) Additif notamment pour améliorer la stabilité thermique des liquides de refroidissement ou d'échange thermique, et en particulier des produits antigels ou anticorrosion présents dans ces liquides. Cet additif est choisi soit dans le groupe des diacides aliphatiques saturés à chaîne droite constitué par les acides succinique, adipique et sébacique, soit dans le groupe des acides aromatiques constitué par les acides salicylique et acétylsalicylique, soit dans le groupe des imides constitué par les imides des diacides aliphatiques et des acides aromatiques précédents et par la benzamide, soit parmi les sels alcalins des diacides aliphatiques et des acides aromatiques précédents.
Application notamment dans le domaine automobile et les dispositifs de chauffage et/ou de refroidissement.

EP 0 348 303 A1

**Description**

**Additif notamment pour produit antigel.**

La présente invention est relative à un additif qui permet notamment d'améliorer la stabilité thermique des produits antigels en particulier. Ceux-ci, présents dans les circuits de refroidissement d'automobiles, doivent rester stables à des températures de l'ordre de 130°C.

Les liquides présents dans les circuits de refroidissement pour automobiles, ainsi que dans les échangeurs thermiques et chaudières, comprennent des composés en phase aqueuse présentant des propriétés anti-oxydantes susceptibles de se dégrader à des températures supérieures à 130°C

Les travaux consistant à obtenir un meilleur rendement énergétique des moteurs thermiques ou un réchauffement rapide de l'habitacle d'une automobile, nécessitent une ouverture plus tardive du calorstat. De ce fait, la température du liquide de refroidissement est plus élevée, ainsi que les températures locales de la culasse : ces dernières peuvent être supérieures à 170°C. Ces points chauds conduisent à faire subir au liquide de refroidissement des chocs thermiques très importants : ceci conduit à la décomposition chimique de certains inhibiteurs de corrosion présents dans les liquides de refroidissement.

Les liquides anticorrosion présents en solution se dégradent à de telles températures supérieures à 130°C : la présence de ces produits de dégradation se traduit par une évolution du pH vers l'alcalinité, le plus souvent pour atteindre des valeurs comprises entre 9 et 11. De plus, la dégradation chimique de ces inhibiteurs favorise la tendance au moussage, ce qui est néfaste au refroidissement et à la circulation. Ceci peut créer localement des attaques sévères des alliages légers par corrosion et cavitation.

Du fait des législation actuellement en vigueur tant en France que dans les pays étrangers, il n'est plus possible d'utiliser des nitrites et des amines, qui sont des produits permettant de stabiliser à haute température des produits tels que des produits antigels ou anticorrosion.

Il a été étudié la tenue à haute température de produits tels que le tétraborate de soude, l'adipate de sodium ou de potassium, le succinate de sodium ou de potassium : ces différents additifs donnent de très bons résultats jusqu'à environ 135°C en général, mais se dégradent à des températures supérieures, entraînant par là-même des attaques sévères des alliages d'aluminium utilisés pour la fabrication des pompes à eau et des culasses par exemple.

Aussi un des buts de la présente invention est-il de fournir un additif permettant d'assurer la stabilité thermique des produits antigels présents dans les liquides de refroidissement, ainsi que des liquides utilisés dans les échangeurs thermiques et les chaudières en particulier.

Un autre but de la présente invention est de fournir de tels additifs qui permettent de stabiliser à des températures supérieures à 150°C des inhibiteurs de corrosion présents dans les liquides de refroidissement ou d'échange de température.

Ces buts, ainsi que d'autres qui apparaîtront par la suite, sont atteints par un additif qui est caractérisé, selon la présente invention, par le fait qu'il est choisi soit dans le groupe des diacides aliphatiques saturés à chaîne droite constitué par les acides succinique, adipique et sébacique, soit dans le groupe des acides aromatiques constitué par les acides salicylique et acétylsalicylique, soit dans le groupe des imides constitué par les imides des diacides aliphatiques et des acides aromatiques précédents et par le benzamide, soit parmi les sels alcalins des diacides al phatiques et des acides aromatiques précédents. De préférence le sel alcalin est du succinate neutre de potassium ou de sodium.

L'additif selon la présente invention, ou un mélange de tels additifs,peut être présent entre 0,1 et 5% en poids dans les liquides de refroidissement ou d'échange thermique habituels. Ils peuvent également être mélangés avec les produits antigels ou anticorrosion avant l'introduction de ces derniers dans les cirduits de refroidissement ou d'échange thermique.

L'acide salicylique, également appelé acide hydroxy-1 benzène carboxylique-2, est le plus connu des acides phénols. La présence dans sa formule des groupements caractéristiques acide et phénol permet de penser qu'il peut bloquer la décomposition des sels de diacides, et jouer un rôle anti-oxydant, protégeant par là-même les sels des diacides présents dans les produits antigels et anticorrosion. Ceci n'est qu'une hypothèse pour expliquer le rôle de l'acide salicylique en tant qu'additif dans les liquides de refroidissement ou d'échange thermique qui, lorsqu'ils en comprennent, peuvent supporter des températures supérieures à 170°C.

De même l'acide acétylsalicylique ou acide acétoxy-1 benzène carboxylique-2, peut être utilisé comme additif selon la présente invention.

Ces deux acides, qui appartiennent à la série aromatique, ont été utilisés en combinaison avec un antigel comprenant des phosphates, adipates et silicates : dans les exemples comparatifs ci-après, cet antigel est dénommé antigel A.

Dans cet antigel A on a ajouté entre 0,1 et 1 % en poids soit d'acide salicylique soit d'acide acétylsalicylique, et l'on a porté le mélange à une température d'au moins 140°C pendant au moins 72 heures. On a mesuré le pH, qui est un très bon indice pour détecter la décomposition du produit antigel : en effet, on a remarqué que lorsqu'un produit antigel ou anticorrosion se dégrade sous l'effet de la température le pH a tendance à devenir de plus en plus alcalin prouvant ainsi la présence de produits de dégradation susceptibles d'attaquer les alliages légers tels que les alliages d'aluminium.

EP 0 348 303 A1

Tableau I

Mesures de pH.

| DUREE (en h) | 0 | 24 | 48 | 72 |
|---|---|---|---|---|
| Antigel A | 7,5 | 9,25 | 10,4 | 10,7 |
| Antigel A et Acide salicylique | 7,5 | 8,65 | 8,95 | 10,2 |
| Antigel A et Acide acétylsalicylique | 7,5 | 8,4 | 8,65 | 9,6 |

De même, des essais de corrosion en verrerie selon la norme ASTM - D 1384 ont été réalisés sur différents métaux ou alliages fréquemment utilisés pour constituer les circuits de refroidissement ou d'échangeur thermique. Les différents résultats sont regroupés dans le tableau II ci-après :

Tableau II

Mesure de corrosion (en mg/éprouvette)

| Métal | Acier | Fonte | Aluminium | Soudure | Laiton | Cuivre |
|---|---|---|---|---|---|---|
| Antigel A | 2,25 | 1,25 | 0,25 | 0,75 | 0,25 | 0,25 |
| Antigel A et Acide salicylique | 2,20 | 1,30 | 0,3 | 0,7 | 0,2 | 0,15 |
| Antigel A et Acide acétylsalicylique | 2 | 1,3 | 0,25 | 0,8 | 0,2 | 0,25 |

En conclusion de ces expériences, on peut noter que l'adjonction de l'acide salicylique ou l'acide acétylsalicylique à des produits antigels permet d'améliorer la stabilité thermique de ces produits, et par là-même d'empêcher la formation de produits de décomposition susceptibles d'attaquer les conduits de refroidissement ou d'échange thermique.

D'autres additifs ayant des propriétés semblables à celles des acides salicylique et acétylsalicylique sont les imides, tels que le benzamide et le succinimide. Tout comme les précédents ces produits sont solubles dans l'eau et l'acool.

Dans le tableau III ci-après, ont été regroupés des résultats de tenue à la température de produits antigels de composition différente :

Antigel A : phosphates, adipate, silicate
Antigel B : phosphates et adipate
Antigel C : phosphate, adipate, nitrate.

Tout comme dans les exemples précédents, ces différents produits ont été portés à 140°C soit seul, soit en mélange avec le benzamide ou le succinimide.

Tableau III

Mesures de pH.

| Durée (en h) | 0 | 24 | 48 | 72 |
|---|---|---|---|---|
| Antigel A | 7,5 | 9,25 | 10,4 | 10,7 |
| Antigel A et 0,2% succinimide | 7,5 | 7,9 | 9,2 | 9,6 |
| Antigel B | 7,5 | 8,55 | 9,4 | 9,85 |
| Antigel B + 0,2% succinimide | 7,55 | 7,9 | 8,8 | 9,0 |
| Antigel C | 7,5 | 8,5 | 9,5 | 9,9 |
| Antigel C + 0,2% succinimide | 7,5 | 7,9 | 8,6 | 8,85 |

3

Ces différents résultats prouvent que la présence d'additifs selon la présente invention améliore de façon notable la tenue à haute température, c'est-à-dire au-dessus de 135°C, de solutions utilisées dans les circuits de refroidissement pour automobiles ou d'échangeur thermique.

Il a été également noté que les sels alcalins notamment de sodium et de potassium des additifs selon la présente invention permettaient également d'améliorer la stabilité thermique des produits antigels ou anticorrosion, et par conséquent celle des liquides de refroidissement ou d'échange thermique.

Ainsi le sel neutre de potassium de l'acide succinique est un inhibiteur de corrosion, d'une part et constitue une réserve d'alcalinité, d'autre part.

Différents essais ont montré que des teneurs de 0,75 à 4% en poids de succinate neutre de potassium en mélange avec :
- 0,5 à 2% en poids de benzoate de sodium
- 0,1 à 0,3% en poids de nitrate de sodium
- 0,1 à 0,5% en poids de métasilicate de sodium
- 0,05 à 0,2% en poids de benzo-ou toluotriazole
- 1 à 2,5% en poids de phosphate de sodium ou de potassium
permettent d'obtenir d'excellents résultats. Les produits ajoutés au succinate neutre de potassium ont pour rôle de permettre l'obtention des caractéristiques physico-chimiques souhaitées notamment en ce qui concerne le pH.

Les essais de corrosion classiques normalisés pour les liquides de refroidissement de moteurs automobiles, les essais de tenue thermique et de corrosion en présence d'alliages d'aluminium à haute température, ont été conduits successivement pour s'assurer de la bonne stabilité en présence des métaux, à température élevée.

L'essai à haute température en autoclave en alliage d'aluminium (Au 4G), choisi pour sa sensibilité à la corrosion plus grande que d'autres alliages d'aluminium sans cuivre, permet d'aller jusqu'à 180°C dans le liquide et peut donc simuler convenablement des points chauds : par exemple dans une culasse de moteur thermique.

Les solutions faites à partir d'une composition d'inhibiteurs de corrosion et d'oxydation comprenant le succinate neutre de potassium (ou de sodium) ont donné de très bons résultats en corrosion et en tenue thermique élevée, tout en conservant un pH satisfaisant, une absence de dépôts et sans corrosion détectable de l'alliage d'aluminium. Le moussage reste dans les tolérances classiques contrairement à ce qui est généralement observé dans les mêmes conditions (malgré des antimousses performants) avec des sels adipiques, sébaciques ou autres.

## Revendications

1. Additif notamment pour améliorer la stabilité thermique des liquides de refroidissement ou d'échange thermique, et en particulier des produits antigels ou anticorrosion présents dans lesdits liquides, caractérisé par le fait qu'il est choisi soit dans le groupe des diacides aliphatiques saturés à chaîne droite constitué par les acides succinique, adipique et sébacique, soit dans le groupe des acides aromatiques constitué par les acides salicylique et acétylsalicylique, soit dans le groupe des imides constitué par les imides des diacides aliphatiques et des acides aromatiques précédents et par le benzamide, soit parmi les sels alcalins des diacides aliphatiques et des acides aromatiques précédents.

2. Additif selon la revendication 1, caractérisé par le fait que le sel alcalin est du succinate neutre de potassium ou de sodium.

3. Composition pour liquide de refroidissement ou d'échange thermique, caractérisé par le fait qu'il comprend de 0,1 à 5% en poids d'un additif ou d'un mélange d'additifs selon l'une des revendications 1 ou 2.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 538 406 (BP CHIMIE) <br> * Revendications 1,5,6,7 * <br> --- | 1,3 | C 09 K 5/00 |
| Y | US-A-2 182 612 (EATON) <br> * Revendications 1,2 * <br> --- | 1,3 | |
| Y | DE-B-1 217 137 (BP) <br> * Revendications 1-3 * <br> ----- | 1,3 | |

DOMAINES TECHNIQUES RECHERCHES (Int. Cl.4)

C 09 K

Le présent rapport a été établi pour toutes les revendications

| Lieu de la recherche | Date d'achèvement de la recherche | Examinateur |
|---|---|---|
| LA HAYE | 03-08-1989 | NICOLAS H.J.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

     .........................................................................
& : membre de la même famille, document correspondant